# EUROPÄISCHE PATENTANMELDUNG

(11) **EP 2 299 249 A1**
(43) Veröffentlichungstag der Anmeldung: **23.03.2011**
(21) Anmeldenummer: 10174791.3
(22) Anmeldetag: 01.09.2010
(51) Int. Cl.: G01J 1/42, G01J 1/32

(54) **Anordnung und Verfahren zur Vermeidung oder Verringerung der Schädigung von strahlungsempfindlichen Exponaten in Ausstellungen oder Museen**

(30) Priorität: 21.09.2009 DE 102009044063
(71) Anmelder: Semperlux Aktiengesellschaft, Lichttechnische Werke, 12277 Berlin (DE)
(72) Erfinder: Bansbach, Udo, 12305 Berlin (DE); Schmits, Paul, 10719 Berlin (DE); Mellies, Nils-Ove, 12203 Berlin (DE); Lade, Christian, 13509 Berlin (DE)
(74) Vertreter: Weisse, Renate

(57) **Zusammenfassung**

Eine Anordnung (10) zur Vermeidung oder Verringerung der Schädigung von strahlungsempfindlichen Exponaten (12,14) in Ausstellungen oder Museen, ist gekennzeichnet durch eine VIS-Sensoranordnung (28,30) zum Ermitteln der nach Wellenlängenbereichen aufgeteilten Beleuchtungsstärke sichtbaren Lichts; zusätzlich einen UV-Sensor (28,30) zum Ermitteln der Beleuchtungsstärke ultravioletter Strahlung, insbesondere aus dem UVA-Wellenlängenbereich; und eine mit den Werten der Beleuchtungsstärke der VIS-Sensoranordnung und des UV-Sensors beaufschlagte Auswerteeinrichtung (36,38), welche aus den Signalen der VIS-Sensoranordnung und des UV-Sensors einen Schädigungsfaktor ermittelt, wobei die Auswerteeinrichtung mit einem Anschluss zur Übertragung des Schädigungsfaktors an einen Warnsignal-Auslöser und/oder eine Regelschleife zur Regelung der Beleuchtungsstärke versehen ist.

## Beschreibung

### Technisches Gebiet

Die Erfindung betrifft eine Anordnung zur Vermeidung oder Verringerung der Schädigung von strahlungsempfindlichen Exponaten, insbesondere in Ausstellungen oder Museen.

Strahlungsempfindliche Exponate sind insbesondere Bilder, beispielsweise Ölgemälde, Aquarelle, Radierungen und dergleichen. Aber auch dreidimensionale Kunstgegenstände, Skulpturen, Teppiche, Stoffe und dergleichen können strahlungsempfindlich sein. Die bei solchen Exponanten verwendeten Materialien und Farbstoffe unterliegen bei Bestrahlung unerwünschten Veränderungen. Eine häufige Erscheinungsform ist das Ausbleichen oder eine Farbveränderung. Der Effekt wird bei Bestrahlung mit Licht und UV-Strahlung verursacht durch eine chemischen Reaktion mit Umgebungsmolekülen wie Wasser oder Sauerstoff oder aufgrund chemischen Zerfalls. Je kürzer die Wellenlänge des Lichts, um so energiereicher ist die Strahlung und um so wahrscheinlicher oder höher ist eine Schädigung des Exponats. Die Schädigungen an den Exponanten sind nicht reversibel.

Aus der Veröffentlichung "Sammlungsgut in Sicherheit" 3.Aufl. von Günter S. Hilbert, Gebr. Mann Verlag Berlin 2002 ist es bekannt die verschiedenen Einflüsse auf den Schädigungsgrad in einer Formel zusammenzufassen und als sogenannten "Schädigungsfaktor" E auszudrücken. Zu den Einflüssen zählen insbesondere der Grad der Bestrahlung, die Wellenlängen der Strahlung und die Dauer der Bestrahlung.

### Stand der Technik

Es ist bekannt die Schädigung von Exponaten zu ermitteln, indem eine blaue Stoffprobe im Bereich des Exponats der gleichen Strahlung ausgesetzt wird, wie das Exponat. Am Ende der Ausstellungszeit wird die farbliche Veränderung der Stoffprobe ermittelt. Aus der farblichen Veränderung der Stoffprobe können Rückschlüsse auf den Schädigungsgrad des Exponats gezogen werden. Der Grad der Schädigung des Exponats kann mit diesem Verfahren zwar ermittelt aber nicht beeinflusst werden. Die Schädigung wird zudem nur ungenau ermittelt. Schließlich wird nur ein akkumulierter Wert am Ende der Ausstellungsperiode ermittelt.

### Offenbarung der Erfindung

Es ist Aufgabe der Erfindung, eine einfache Anordnung und ein Verfahren zu schaffen, mit welchem die Schädigung eines strahlungsempfindlichen Exponats vermieden oder minimiert werden kann. Erfindungsgemäß wird die Aufgabe mit einer Anordnung der eingangs genannten Art gelöst, die gekennzeichnet ist durch
(a) eine VIS-Sensoranordnung zum Ermitteln der nach Wellenlängenbereichen aufgeteilten Beleuchtungsstärke sichtbaren Lichts;
(b) zusätzlich einen UV-Sensor zum Ermitteln der Beleuchtungsstärke ultravioletter Strahlung, insbesondere aus dem UVA-Wellenlängenbereich; und
(c) eine mit den Werten der Beleuchtungsstärke der VIS-Sensoranordnung und des UV-Sensors beaufschlagte Auswerteeinrichtung, welche aus den Signalen der VIS-Sensoranordnung und des UV-Sensors einen Schädigungsfaktor ermittelt,
(d) wobei die Auswerteeinrichtung mit einem Anschluss zur Übertragung des Schädigungsfaktors an einen Warnsignal-Auslöser und/oder eine Regelschleife zur Regelung der Beleuchtungsstärke versehen ist.

Mit einer solchen Anordnung ist es möglich den jeweils aktuellen Schädigungsgrad des Exponats zeitnah zu ermitteln. Statt einer ungenauen Messung mittels einer Stoffprobe wird die Hauptursache der Schädigung, nämlich Strahlung, messtechnisch erfasst. Dabei wird nicht nur sichtbares Licht aus dem sichtbaren (VIS-) Wellenlängenbereich, sondern auch ultraviolette (UV-) Strahlung erfasst. Herkömmliche Lichtsensoren oder RGB-Sensoren erfassen diese Strahlung anders als die erfindungsgemäße Anordnung nicht. Kommerziell verfügbare Sensoren sind daher für die Lösung der Aufgabe nicht geeignet. UV-Strahlung trägt nicht zur Beleuchtungsqualität bei. Sie schädigt aber aufgrund der höheren Energie das Exponat mehr als langwelliges, sichtbares Licht. Eine unerwünschte Bestrahlung mit UV-Strahlung kann mit der erfindungsgemäßen Anordnung zeitnah erfasst und unterbunden oder reduziert werden. Dadurch wird eine Schädigung der Exponate frühzeitig verringert.

Die Anordnung umfasst eine mit den Werten der Beleuchtungsstärke der VIS-Sensoranordnung und des UV-Sensors beaufschlagte Auswerteeinrichtung, welche aus den Signalen der VIS-Sensoranordnung und des UV-Sensors einen Schädigungsfaktor ermittelt. Eine solche Auswerteeinrichtung kann beispielsweise einen Prozessor und einen Speicher aufweisen. Mit dem Prozessor werden die Signale nach einer hinterlegten Formel oder Kurven zu einem Schädigungsfaktor berechnet. Anschließend wird der berechnete Wert an einen Warnsignal-Auslöser übertragen. Ein Warnsignal-Auslöser kann ein optisches oder akustisches Signal auslösen oder eine Nachricht oder dergleichen generieren, wenn ein vorgegebener Schwellwert für einen Schädigungsfaktor überschritten wird. Stattdessen oder zusätzlich kann der Schädigungsfaktor auch in einem geeigneten Format gespeichert werden. Der gespeicherte Wert gehört zu dem Exponat und kann so die Grundlage für die weitere Beleuchtungsstrategie sein.

Statt eines Warnsignals oder zusätzlich dazu kann der Schädigungsfaktor auch zur Regelung der Beleuchtungsstärke verwendet werden. Wenn der Schädigungsfaktor zu groß wird, wird die Beleuchtung gedimmt. Wenn der Schädigungsfaktor gering ist, darf die Beleuchtung zunehmen. Neben der Beleuchtung mit Kunstlicht kann auch die Beleuchtung durch natürliches Tageslicht beeinflusst werden. Kunstlicht wird gedimmt. Bei Tageslicht wird die Beleuchtung durch geeignete Beschattung geregelt. Hierfür sind beispielsweise Jalousien, Lamellen oder Vorhänge geeignet.

Vorzugsweise ist der Sensor unmittelbar am Exponat angeordnet. Dabei ist es sinnvoll, den Sensor an einer Stelle anzubringen, an welcher die Beleuchtungsstärke der Beleuchtungsstärke am Exponat entspricht. Vorzugsweise ist die Auswerteeinrichtung der Sensoreinrichtung in einer von den Sensoren getrennten Basisstation angeordnet. Die Sensoren können dann klein und zierlich ausgeführt werden und am Exponat befestigt werden. Die größere Auswerteeinrichtung, welche auch mit einem Anschluss für die Signalübertragung versehen ist, darf etwas größer sein und kann beispielsweise im Bereich der Fußleiste unterhalb des Exponats, oder an der Decke installiert werden. Sensor und Basisstation können über eine kurze Kabelverbindung zur Übertragung von elektrischer Energie und Daten miteinander verbunden sein.

Der Warnsignal-Auslöser oder die Regelschleife zur Regelung der Beleuchtungsstärke können über eine DALI- oder DMX-Schnittstelle direkt, über ein Local Area Network (LAN) und/oder über eine zentrale Steuereinheit an die Basisstation angeschlossen sein. Bei einer Vielzahl von Exponaten ist es sinnvoll eine zentrale Steuereinheit, beispielsweise einen geeignet eingerichteten Computer vorzusehen. Die Basisstationen werden dann über ein verkabeltes oder drahtloses LAN mit der zentralen Steuereinheit verbunden. Die Steuerung der Leuchten kann über ein Digital Addressable Lighting Interface (DALI)- oder DMX-Netzwerk, beispielsweise eine DALI-Stromschiene erfolgen, über welche die Leuchten auch mit Energie versorgt werden. Hierfür sind geeignete DALI-Router vorgesehen. Solche DALI-Steuerungen für Beleuchtungseinrichtungen sind allgemein bekannt (s.www.dali-ag.de) und brauchen daher hier nicht näher beschrieben werden.

In einer Ausgestaltung der Erfindung umfasst die VIS-Sensoranordnung drei lichtempfindliche Detektoren. Solche lichtempfindlichen Detektoren können insbesondere Photodioden sein. Diese erzeugen bei Bestrahlung ein elektrisches Signal, welches die Beleuchtungsstärke (Strahldichte) repräsentiert. Es versteht sich, dass auch andere lichtempfindliche Detektoren, etwa CCD-Zeilen oder dergleichen geeignet sind. Einer der Detektoren ist vorzugsweise mit einem Rotfilter, einer mit einem Grünfilter und einer mit einem Blaufilter versehen. Mit einem solchen "RGB-Sensor" kann das Licht wellenselektiv aufgenommen werden. Da langwelliges Licht im allgemeinen eine geringere Schädigung hervorruft als kurzwelliges Licht kann auf diese Weise ein genauerer Wert für den Schädigungsfaktor ermittelt werden.

Vorzugsweise ist der UV-Sensor zum Ermitteln der Beleuchtungsstärke ultravioletter Strahlung gemeinsam mit der VIS-Sensoranordnung und der für Versorgung, Steuerung und Signalübertragung erforderlichen Elektronik auf einer Leiterplatte montiert.

In einer weiteren Ausgestaltung der Erfindung sind weitere Sensoren für Temperatur und/oder Feuchte und/oder weitere Umgebungsbedingungen vorgesehen. Mit solchen Sensoren lassen sich auch Schädigungsrisiken mit anderen Ursachen erfassen. Zusätzlich wird der IR-Anteil der im wesentlichen über die Erwärmung des Exponats wirkt indirekt über einen solchen Temperatursensor erfasst.

Die Erfindung wird auch verwirklicht mit einer Beleuchtungsanordnung für strahlungsempfindliche Exponate in Museen oder Ausstellungen enthaltend
(a) ein Datenübertragungssystem, in welchem Daten nach dem DALI- oder DMX-Standard übertragbar sind;
(b) eine oder mehrere nach DALI- oder DMX-Standard steuerbare Leuchten;
(c) eine oder mehrere der oben beschriebenen Sensoranordnungen.

Mit den Sensoranordnungen wird aus der wellenlängenabhängigen Beleuchtungsstärke ein Schädigungsgrad ermittelt, welcher zum Regeln der Beleuchtungsstärke durch die Leuchten dient. Die Steuerung der Leuchten erfolgt über ein DALI- oder DMX-Netzwerk.

In einer Ausgestaltung der Beleuchtungsanordnung ist die Sensoranordnung über ein Local Area Network mit einer zentralen Steuereinheit verbunden, welche über das DALI- oder DMX-Datenübertragungssystem auch die Leuchten steuert.

Die Vermeidung oder Verringerung der Schädigung von strahlungsempfindlichen Exponaten in Ausstellungen oder Museen wird durch ein Verfahren erreicht mit den Schritten:
(a) kontinuierliches Ermitteln der nach Wellenlängenbereichen aufgeteilten Beleuchtungsstärke sichtbaren Lichts;
(b) kontinuierliches Ermitteln der Beleuchtungsstärke ultravioletter Strahlung, insbesondere aus dem UVA-Wellenlängenbereich;
(c) kontinuierliches oder intervallweises Berechnen eines Schädigungsfaktors aus den Werten für die Beleuchtungsstärke des sichtbaren Lichts und der ultravioletten Strahlung; und
(d) Übertragen des Schädigungsfaktors an einen Warnsignal-Auslöser oder eine Regelschleife zur Regelung der Beleuchtungsstärke, und
(e) Auslösen eines Warnsignals oder Regeln der die Beleuchtungsstärke hervorrufenden Lichtquellen nach Maßgabe des berechneten Schädigungsfaktors.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

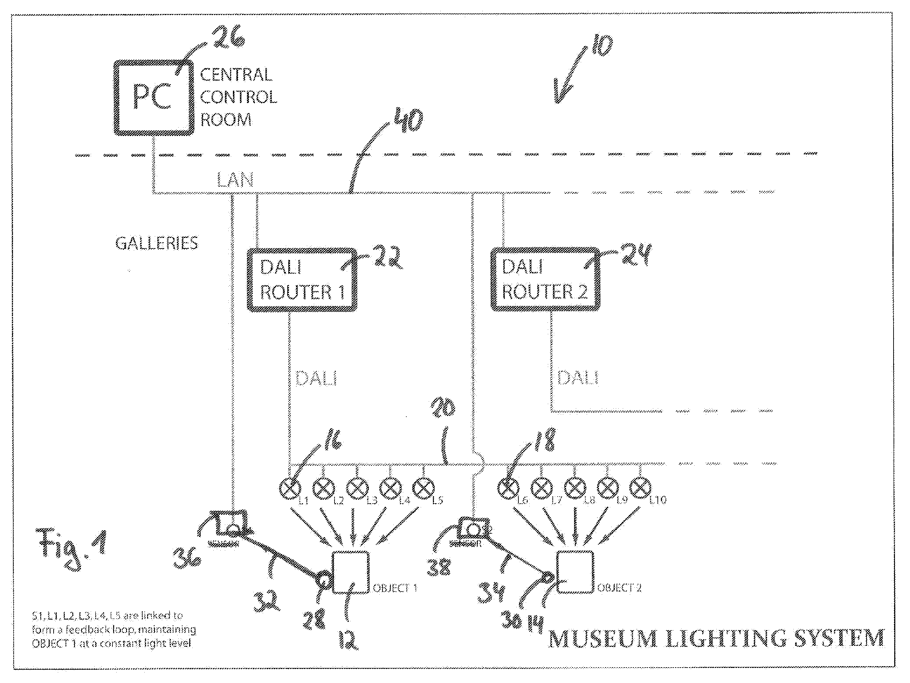

- Fig.1: ist eine schematische Darstellung eines Beleuchtungssystems für Exponate in einem Museum.

### Beschreibung des Ausführungsbeispiels

In Figur 1 ist ein allgemein mit 10 bezeichnetes Beleuchtungssystem für Exponate 12, 14 in einem Museum dargestellt. Im vorliegenden Ausführungsbeispiel sind beispielhaft nur 2 Exponate dargestellt. Es versteht sich, dass die Anzahl der Exponate in der Praxis erheblich höher ist. Die Exponate 12, 14 sind an einer Wand befestigt. Das Exponat 12 wird mit Leuchten 16 beleuchtet. Das Exponat 14 wird mit Leuchten 18 beleuchtet. Die Leuchten 16, 18 sind an ein DALI-Stromschienensystem 20 angeschlossen. Über das DALI-Stromschienensystem werden die Leuchten 16, 18 mit Strom versorgt. Weiterhin sind DALI-Router 22 und 24 vorgesehen, über welche die Leuchten 16, 18 gesteuert werden. Typische Steuerungsparameter der Leuchten sind die Helligkeit und die Strahlrichtung. Auch eine zeitliche Steuerung ist über die Router 22, 24 möglich. Die Router 22, 24 sind über ein Local Area Network (LAN) mit einem Computer 26 verbunden. Der Computer 26 ist mit einer Eingabe- und Ausgabe versehen. An dem Computer 26 wird die Steuerung zentral durchgeführt.

Unmittelbar neben den Exponaten 12 und 14 ist jeweils ein Sensor 28 bzw. 30 befestigt. Die Sensoren 28 und 30 werden auf gleiche Weise beleuchtet wie die Exponate 12 und 14 selber. Die Sensoren 12 und 14 sind von Photodioden mit Farbfiltern gebildete RGB-Sensoren mit einem zusätzlichen UVA-Sensor. Die RGB-Sensoren und der UVA-Sensor sind auf einem gemeinsamen Chip montiert und verdrahtet. Das von den Sensoren 28 und 30 bei Beleuchtung erzeugte elektrische Signal wird über eine Datenübertragungsleitung 32 und 34 jeweils an eine zugehörige Basisstation 36 bzw. 38 übertragen. Die Basisstationen 36 und 38 weisen einen Prozessor und einen Speicher auf. Sie sind ferner mit einer Schnittstelle zur Datenübertragung an das Local Area Network 40 ausgestattet. Über das LAN werden die von den Sensoren 28 und 30 aufgenommenen und an der Basisstation verarbeiteten Messwerte zum Computer 26 übertragen. Aus den von den Sensoren ermittelten Messwerten wird vom Prozessor in der Basisstation ein Schädigungsfaktor berechnet. Der berechnete Wert wird in dem Speicher gespeichert und gleichzeitig an den Computer 26 übertragen. Der Computer vergleicht den aktuellen Wert des Schädigungsfaktors mit einem vorgegebenen, gespeicherten Schwellwert. Wenn der Schwellwert überschritten wird, wird ein Steuersignal erzeugt. Das Steuersignal wird über das LAN und das DALI-Netzwerk an die Leuchten 16, 18 übertragen. Die Leuchten werden dann gedimmt oder die Abstrahlrichtung wird so geändert, dass die Beleuchtungsstärke am Exponat verringert wird.

Auf diese Weise kann eine Schädigung des Exponats frühzeitig verhindert werden. Der Speicher in der Basisstation 36, 38 und/oder der Computer 26 speichern die ermittelten Schädigungsfaktoren als Funktion der Zeit für jedes Exponat 12, 14. Auf diese Weise ist nachträglich nachvollziehbar, welcher Beleuchtung und welcher Schädigung das Exponat ausgesetzt wurde.

Die Erfindung wurde hier anhand konkreter Übertragungswege beschrieben. Es versteht sich, dass alternative technische Lösungen möglich sind, ohne vom Erfindungsgedanken abzuweichen. So kann beispielsweise statt einer verkabelten Verbindung bei LAN und DALI auch eine drahtlose Datenübertragung vorgesehen sein. Auch besteht die Möglichkeit, die Basisstationen direkt, beispielsweise drahtlos, mit dem Computer zu verbinden.

## Patentansprüche

1. Anordnung zur Vermeidung oder Verringerung der Schädigung von strahlungsempfindlichen Exponaten, insbesondere in Ausstellungen oder Museen, **gekennzeichnet durch**
(a) eine VIS-Sensoranordnung zum Ermitteln der nach Wellenlängenbereichen aufgeteilten Beleuchtungsstärke sichtbaren Lichts;
(b) zusätzlich einen UV-Sensor zum Ermitteln der Beleuchtungsstärke ultravioletter Strahlung, insbesondere aus dem UVA-Wellenlängenbereich; und
(c) eine mit den Werten der Beleuchtungsstärke der VIS-Sensoranordnung und des UV-Sensors beaufschlagte Auswerteeinrichtung, welche aus den Signalen der VIS-Sensoranordnung und des UV-Sensors einen Schädigungsfaktor ermittelt,
(d) wobei die Auswerteeinrichtung mit einem Anschluss zur Übertragung des Schädigungsfaktors an einen Warnsignal-Auslöser und/oder eine Regelschleife zur Regelung der Beleuchtungsstärke versehen ist.

2. Anordnung nach Anspruch 1, **dadurch gekennzeichnet, dass** die Auswerteeinrichtung in einer von den Sensoren getrennten Basisstation angeordnet ist.

3. Anordnung nach einem der vorgehenden Ansprüche, **dadurch gekennzeichnet, dass** der Warnsignal-Auslöser oder die Regelschleife zur Regelung der Beleuchtungsstärke über eine DALI oder DMX-Schnittstelle direkt, über ein Local Area Network (LAN) und/oder über eine zentrale Steuereinheit an die Basisstation angeschlossen sind.

4. Anordnung nach einem der vorgehenden Ansprüche, **dadurch gekennzeichnet, dass** die VIS-Sensoranordnung drei lichtempfindliche Detektoren, insbesondere Photodioden umfasst, von denen einer mit einem Rotfilter, einer mit einem Grünfilter und einer mit einem Blaufilter versehen ist.

5. Anordnung nach einem der vorgehenden Ansprüche, **dadurch gekennzeichnet, dass** der UV-Sensor zum Ermitteln der Beleuchtungsstärke ultravioletter Strahlung gemeinsam mit der VIS-Sensoranordnung und der für Versorgung, Steuerung und Signalübertragung erforderlichen Elektronik auf einer Leiterplatte montiert ist.

6. Anordnung nach einem der vorgehenden Ansprüche, **gekennzeichnet durch** einen weiteren Sensor für Temperatur und/oder Feuchte und/oder weitere Umgebungsbedingungen.

7. Beleuchtungsanordnung für strahlungsempfindliche Exponate in Museen oder Ausstellungen enthaltend
(a) ein Datenübertragungssystem in welchem Daten nach dem DALI- oder DMX-Standard übertragbar sind;
(b) eine oder mehrere nach DALI- oder DMX-Standard steuerbare Leuchten;
(c) eine oder mehrere Sensoranordnungen nach einem der vorgehenden Ansprüche.

8. Beleuchtungsanordnung nach Anspruch 7, **dadurch gekennzeichnet, dass** die Sensoranordnung über ein Local Area Network mit einer zentralen Steuereinheit verbunden sind, welche über das DALI- oder DMX-Datenübertragungssystem auch die Leuchten steuert.

9. Verfahren zur Vermeidung oder Verringerung der Schädigung von strahlungsempfindlichen Exponaten in Ausstellungen oder Museen mit den Schritten:
(a) kontinuierliches Ermitteln der nach Wellenlängenbereichen aufgeteilten Beleuchtungsstärke sichtbaren Lichts;
(b) kontinuierliches Ermitteln der Beleuchtungsstärke ultravioletter Strahlung, insbesondere aus dem UVA-Wellenlängenbereich;
(c) kontinuierliches oder intervallweises Berechnen eines Schädigungsfaktors aus den Werten für die Beleuchtungsstärke des sichtbaren Lichts und der ultravioletten Strahlung; und
(d) Übertragen des Schädigungsfaktors an einen Warnsignal-Auslöser oder eine Regelschleife zur Regelung der Beleuchtungsstärke, und
(e) Auslösen eines Warnsignals oder Regeln der die Beleuchtungsstärke hervorrufenden Lichtquellen nach Maßgabe des berechneten Schädigungsfaktors.
